# EUROPEAN PATENT APPLICATION

(11) **EP 4 756 137 A1**
(43) Date of publication of application: **10.06.2026**
(21) Application number: 24871365.3
(22) Date of filing: 22.05.2024
(51) Int. Cl.: E02F 9/26, B60K 35/00, B60K 35/80, E02F 9/16, E02F 9/20

(54) **OPERATION DEVICE AND WORK MACHINE PROVIDED WITH SAME**

(30) Priority: 27.09.2023 JP 2023166402
(71) Applicant: Hitachi Construction Machinery Co., Ltd., Tokyo 110-0015 (JP)
(72) Inventor: ISHII, Takaaki, Tsuchiura-shi, Ibaraki 300-0013 (JP); TOKITA, Shigeki, Tsuchiura-shi, Ibaraki 300-0013 (JP); KUROKAMI, Kazushige, Tsuchiura-shi, Ibaraki 300-0013 (JP); SAKAMOTO, Hiroshi, Tsuchiura-shi, Ibaraki 300-0013 (JP)
(74) Representative: Manitz Finsterwald Patent- und Rechtsanwaltspartnerschaft mbB
(86) International application number: PCT/JP2024/018775
(87) International publication number: WO 2025/069554

(57) **Abstract**

Provided are an operation device and a work machine provided with the same, the operation device being capable of instantly adjusting an audio player sound volume even when the audio player sound volume sounds quite or loud as a result of adjusting an engine speed during audio playback, or capable of instantly adjusting an air conditioner air volume even when it is desired to suppress engine power loss or to improve fuel efficiency by reducing an air volume of an air conditioner as a result of adjusting an engine speed during operation of the air conditioner. In the operation device in which an engine speed adjustment function and an audio player sound volume adjustment function are exclusively assigned to a rotation operation of a dial, in a state in which the engine speed adjustment function is assigned to the rotation operation of the dial, the assignment of the rotation operation of the dial is switched to the audio player sound volume adjustment function by tilting the dial in one direction. In a state where the audio player sound volume adjustment function is assigned to the rotation operation of the dial, the assignment of the rotation operation of the dial is switched to the engine speed adjustment function by tilting the dial in a direction opposite to that when the assignment of the rotation operation of the dial is switched from the engine speed adjustment function to the audio player sound volume adjustment function.

## Description

### Technical Field

The present invention relates to an operation device including a dial that receives a rotation operation, a cross-direction operation, and the like, and a work machine such as a hydraulic excavator provided with such an operation device.

### Background Art

Conventionally, in a work machine such as a hydraulic excavator, as the number of functions increases, the number of input switches for using these functions also tends to increase. However, if the number of switches is too large, this deteriorates operability and affects comfort in an operator's room. Therefore, Patent Literature 1 (JP 2022-26000 A) discloses an operation device capable of selectively assigning a function of adjusting a speed of an engine and a screen operation function of performing an operation according to a screen displayed on a monitor to a dial that receives a rotation operation as a method capable of improving operability while suppressing an increase in the number of parts.

### Citation List

### Patent Literature

Patent Literature 1: JP 2022-26000 A

### Summary of Invention

### Technical Problem

However, in a case where the operation device according to Patent Literature 1 is used, the number of parts can be reduced because one operation device can be used in adjusting the engine speed required for operating the work machine and operating the screen displayed on the monitor. However, when adjusting a sound volume of an audio player and an air volume of an air conditioner, an operation device different from the operation device according to this literature is used or the adjustment is performed as a screen operation, which makes it difficult to instantly adjust the sound volume of the audio player and the air volume of the air conditioner in response to a request for changing how the audio player sounds and adjusting the air volume of the air conditioner, which can be caused by the adjustment of the engine speed.

For example, when the engine speed is reduced from a high speed to a low speed during audio playback, the engine sound heard in the operator's room is reduced, and thus the audio player sound volume may sound louder than before the engine speed is reduced. On the other hand, when the engine speed is increased from a low speed to a high speed, the engine sound is increased, and thus the audio player sound volume may sound quieter than before the engine speed is increased. During audio playback, particularly in a call using a hands-free function in which a smartphone or a mobile phone is connected to the audio player, the other party's voice may sound louder or quieter after the engine speed is adjusted, and thus it is preferable that the audio player sound volume can be instantly adjusted.

In addition, since the compressor of the air conditioner uses power from the engine, as a result of adjusting the engine speed, it may be desired to suppress engine power loss (when the engine speed is reduced, the air conditioner takes much of the engine power, and it is desired to secure the engine output in operating the work machine), or to improve fuel efficiency (when the engine output is reduced for the purpose of driving with low fuel consumption, it is desired to reduce the air volume of the air conditioner to drive with low fuel consumption) by reducing the air volume of the air conditioner, and thus it is preferable that the air volume of the air conditioner can be instantly adjusted.

Therefore, the present invention has been made in view of the above, and an object of the present invention is to provide an operation device and a work machine provided with the same, the operation device being capable of instantly adjusting an audio player sound volume even when the audio player sound volume sounds quite or loud as a result of adjusting an engine speed during audio playback, or capable of instantly adjusting an air conditioner air volume even when it is desired to suppress engine power loss or to improve fuel efficiency by reducing an air volume of an air conditioner as a result of adjusting an engine speed during operation of the air conditioner.

### Solution to Problem

In order to solve the aforementioned problems, one representative operation device according to the present invention includes: a dial configured to receive a rotation operation and an operation in a direction different from that of the rotation operation; and a controller configured to switch a function assigned to the rotation operation of the dial to a first adjustment function and a second adjustment function when the operation in the direction different from that of the rotation operation of the dial is received, the first adjustment function being an engine speed adjustment function of adjusting a speed of an engine, and the second adjustment function being at least one of an audio player sound volume adjustment function of adjusting a sound volume of an audio player and an air conditioner air volume adjustment function of adjusting an air volume of an air conditioner.

### Advantageous Effects of Invention

According to the present invention, the audio player sound volume can be instantly adjusted even when how the loudness of the sound of the audio player changes as a result of adjusting the engine speed during audio playback. Alternatively, the air volume of the air conditioner can be instantly adjusted even when a request for adjusting the air volume of the air conditioner is generated as a result of adjusting the engine speed during the operation of the air conditioner.

Problems, configurations, and effects other than those described above will become apparent from the following description of embodiments.

### Brief Description of Drawings

Fig. 1 is a perspective view schematically illustrating an appearance of a hydraulic excavator illustrated as an example of a work machine according to the present embodiment.
Fig. 2 is a diagram illustrating a hydraulic drive device of a hydraulic excavator illustrated as an example of a work machine according to the present embodiment together with a control unit thereof.
Fig. 3A is a diagram schematically illustrating an example of a device configuration in an operator's room of a vehicle body according to the present embodiment.
Fig. 3B is an enlarged plan view illustrating a dial and push buttons as operation devices of Fig. 3A.
Fig. 3C is an enlarged perspective view illustrating a dial as an operation device of Fig. 3A.
Fig. 4 is a simple system configuration diagram illustrating operation devices according to the present embodiment together with peripheral components.
Fig. 5 is a diagram schematically illustrating an example of a method of switching a function assigned to a rotation operation of a dial according to the present embodiment.
Fig. 6 is a flowchart illustrating processing performed by an operation device control device (during a rotation operation and a cross-direction operation of a dial) according to the present embodiment.
Fig. 7 is a flowchart illustrating processing performed by an operation device control device (during a pressing operation of a dial) according to the present embodiment.
Fig. 8 is a diagram schematically illustrating an example of correspondence between displays on a monitor in a case where a rotation operation of a dial is assigned to an engine speed adjustment function according to the present embodiment.
Fig. 9 is a diagram schematically illustrating an example of correspondence between displays on a monitor in a case where a rotation operation of a dial is assigned to an audio player sound volume adjustment function according to the present embodiment.
Fig. 10 is a diagram schematically illustrating an example of correspondence between displays on a monitor in a case where a rotation operation of a dial is assigned to an air conditioner air volume adjustment function according to the present embodiment.
Fig. 11 is a diagram schematically illustrating an example of correspondence between displays on a monitor in a case where a cross-direction operation of a dial is assigned to a cursor moving operation on a screen according to the present embodiment.

### Description of Embodiments

Hereinafter, an embodiment of the present invention will be described with reference to the drawings with an example of a work machine using the present invention.

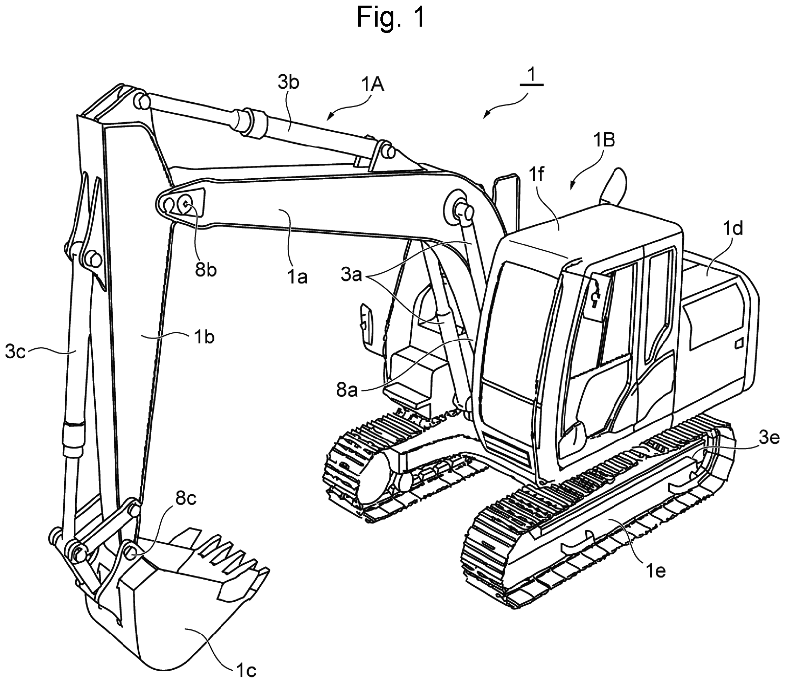

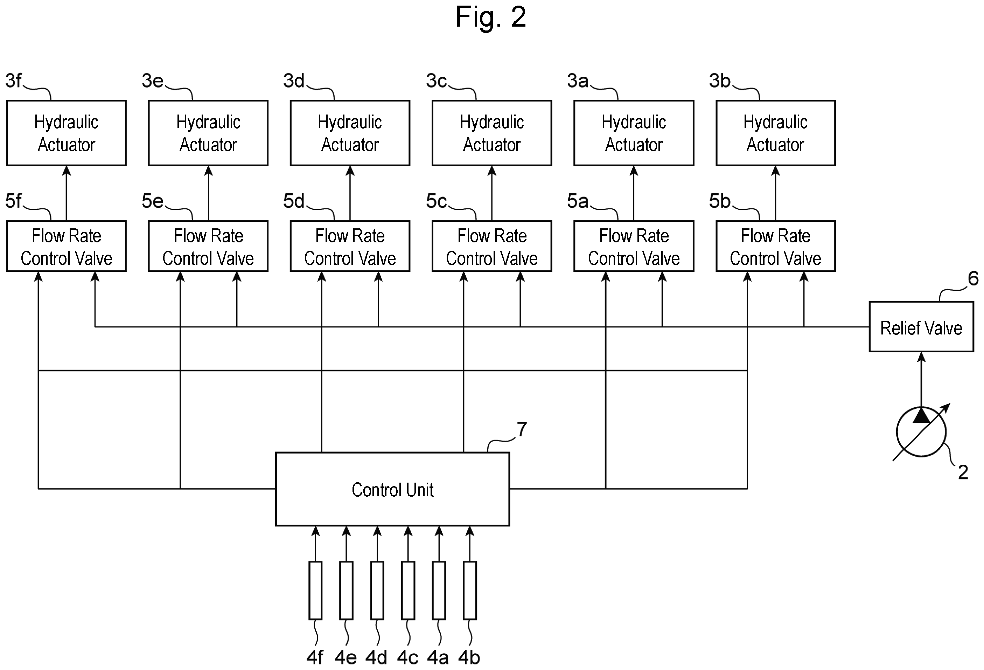

Fig. 1 is a perspective view schematically illustrating an appearance of a hydraulic excavator illustrated as an example of a work machine according to the present embodiment. Fig. 2 is a diagram illustrating a hydraulic drive device of a hydraulic excavator illustrated as an example of a work machine according to the present embodiment together with a control unit thereof.

As illustrated in Fig. 1, the hydraulic excavator 1 includes a vehicle body (work machine body) 1B including an upper swing body 1d and a lower traveling body 1e, and an articulated work device 1A including a boom 1a, an arm 1b, and a bucket 1c, each of which pivots in the vertical direction, and attached to the front of the upper swing body 1d, with a proximal end of the boom 1a of the work device 1A being supported by a front portion of the upper swing body 1d. The work device 1A is configured by connecting a plurality of driven members (a boom 1a, an arm 1b, and a bucket 1c as an attachment), and is capable of performing operations such as excavation and soil release. The upper swing body 1d is provided to be swingable above the lower traveling body 1e, and the upper swing body 1d is provided with an operator's room (also referred to as cab) 1f.

The boom 1a, the arm 1b, the bucket 1c, the upper swing body 1d, and the lower traveling body 1e in Fig. 1 are driven by respective hydraulic actuators of a boom cylinder 3a, an arm cylinder 3b, a bucket cylinder 3c, a swing motor 3d, and left and right traveling motors 3e and 3f illustrated in Figs. 1 and 2, and their operations are instructed by the plurality of operation lever devices 4a to 4f. The plurality of operation lever devices 4a to 4f are disposed in the operator's room 1f on which the operator boards, and instruct the plurality of hydraulic actuators 3a to 3f to operate according to respective operation amounts.

In Fig. 2, the hydraulic excavator 1 according to the present embodiment includes a hydraulic pump 2, a plurality of hydraulic actuators including a boom cylinder 3a, an arm cylinder 3b, a bucket cylinder 3c, a swing motor 3d, and left and right traveling motors 3e and 3f driven by pressurized oil from the hydraulic pump 2, a plurality of operation lever devices 4a to 4f provided to correspond to the respective hydraulic actuators 3a to 3f, a plurality of flow rate control valves 5a to 5f controlled by the operation lever devices 4a to 4f and control flow rates of pressurized oil to be supplied to the hydraulic actuators 3a to 3f, a relief valve 6 opened when the discharge pressure of the hydraulic pump 2 becomes equal to or higher than a set value, and a control unit 7 having a function of controlling the flow rate control valves 5a to 5f by inputting operation signals from the operation lever devices 4a to 4f, which constitute a hydraulic driving device that drives each of a plurality of driven members including the boom 1a, the arm 1b, the bucket 1c, the upper swing body 1d, and the lower traveling body 1e of the hydraulic excavator 1. The hydraulic pump 2 is driven by rotation of an engine (not illustrated) to discharge pressurized oil (operating oil) to each of the hydraulic actuators 3a to 3f.

As illustrated in Fig. 1, angle sensors (posture sensors) 8a, 8b, and 8c that detect pivoting angles of the boom 1a, the arm 1b, and the bucket 1c are provided on a boom pin, an arm pin, and a bucket pin included in the work device 1A. A posture of the work device 1A can be detected based on the angles detected by the angle sensors 8a, 8b, and 8c, and the angle sensors 8a, 8b, and 8c function as posture sensors that detect a posture of the work device 1A. As a posture sensor of the work device 1A, an inertial measurement unit (IMU) attached to each of the boom 1a, the arm 1b, and the bucket 1c can be used.

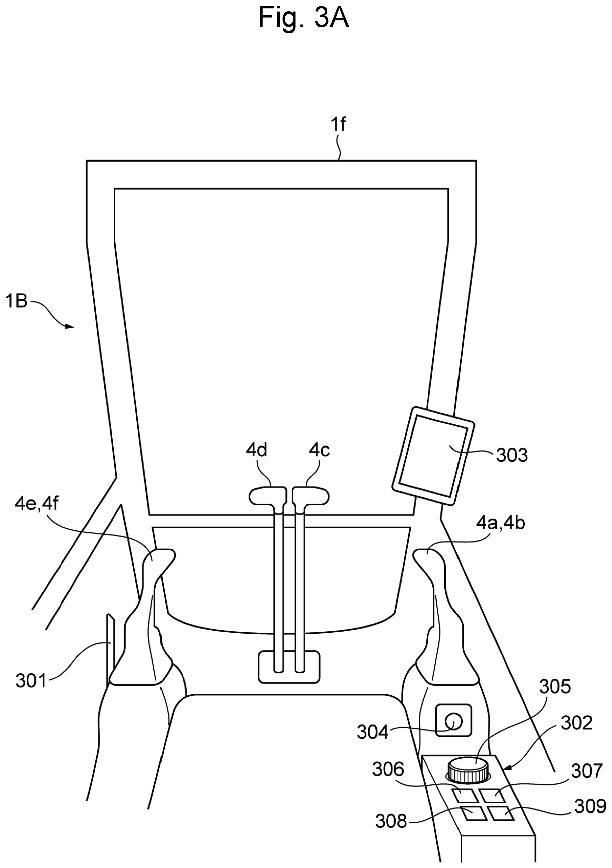

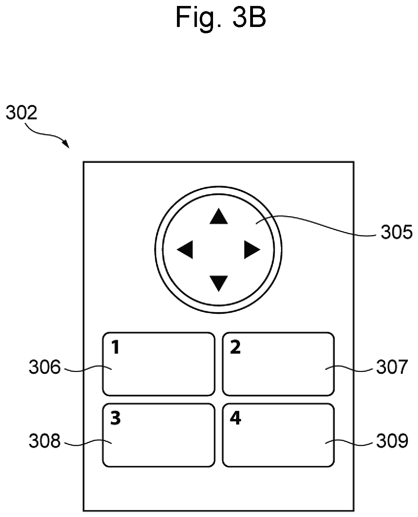

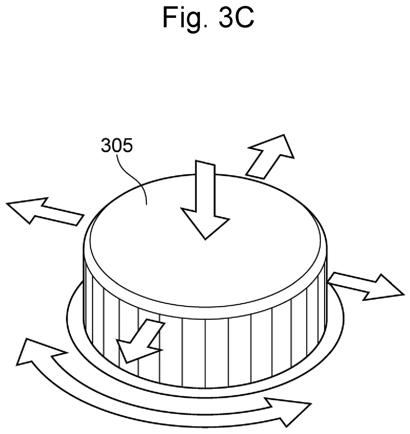

Figs. 3A, 3B, and 3C are views schematically illustrating examples of devices installed in the operator's room 1f of the vehicle body 1B according to the present embodiment.

A lever 301 is a safety device that switches between enabling and disabling the drive of the hydraulic excavator 1 with respect to the operation of the operation lever devices 4a to 4f. An operation device group 302 for using the functions of the hydraulic excavator 1 (which may hereinafter be simply referred to as operation devices 302) includes a dial operation device 305 and push button operation devices 306 to 309, and each operation device is an input device that can use the function of the hydraulic excavator 1 according to the present embodiment. Typical examples of the functions include adjusting an engine speed, operating a wiper, operating an audio player, and operating an air conditioner. The dial operation device (also simply referred to as dial) 305 has a mechanism that can be rotated, moved in cross directions (up, down, left, and right) and pushed in down from above (particularly see Fig. 3C). The push button operation devices (also simply referred to as push buttons) 306 to 309 are disposed near the dial operation device 305 and have mechanisms that can be pushed in down from above. A monitor 303 includes a touch panel, and is a device for presenting various types of information and using functions of the hydraulic excavator 1. At the time of operating the monitor 303, the operation device group 302 is used or a touch operation is performed on the monitor 303. An engine starter 304 is a device for controlling the start of the engine (engine start control device) of the hydraulic excavator 1. The engine starter 304 is provided between the operation lever devices 4a and 4b and the operation device group 302, in other words, in front of the operation device group 302.

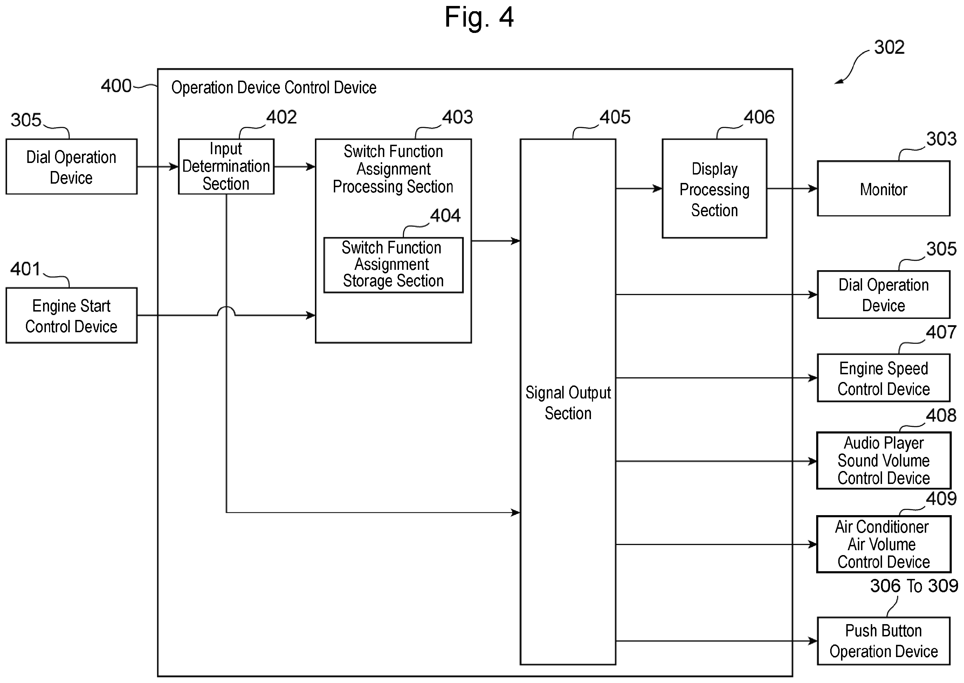

Fig. 4 is a simple system configuration diagram illustrating the operation devices according to the present embodiment together with peripheral components.

An operation device control device (controller) 400 according to the present embodiment illustrated in Fig. 4 is provided in the hydraulic excavator 1 according to the present embodiment. In response to signals input by the operator through the operation device group 302 and the engine start control device 401, the operation device control device 400 assigns functions to the operation device group 302, executes functions that the hydraulic excavator 1 has, and presents information thereof to the monitor 303 or the like. The operation device control device 400 includes an input determination section 402, a switch function assignment processing section 403, a switch function assignment storage section 404, a signal output section 405, and a display processing section 406, and includes an engine start control device 401, a monitor 303, an engine speed control device 407, an audio player sound volume control device 408, and an air conditioner air volume control device 409 as peripheral devices.

In response to an operation of the dial operation device 305, the input determination section 402 determines in which direction the rotation operation has been input, in which direction the cross-direction operation has been input, or whether the pressing operation has been input. When it is determined that a signal that satisfies a condition for changing the function assignment of the operation device group 302 has been input, the signal is sent to the switch function assignment processing section 403. In accordance with the information from the signal, the switch function assignment processing section 403 sends a signal for switching the function assignment of each switch of the operation device group 302 to the signal output section 405. Upon receiving the signal for switching the function assignment of the operation device group 302 from the signal output section 405, the display processing section 406 sends, to the monitor 303, a signal for displaying the state of assignment of functions to the operation device group 302. In addition, the signal output section 405 sends signals for switching the assigned functions to the dial operation device 305 and the push button operation devices 306 to 309.

When receiving a signal for the rotation operation of the dial operation device 305 from the input determination section 402, the signal output section 405 sends a signal to one of the engine speed control device 407, the audio player sound volume control device 408, and the air conditioner air volume control device 409 according to the function assigned to the dial operation device 305, and at the same time, sends a signal for switching the display to the monitor 303 through the display processing section 406.

When a signal determining that the engine has been turned off is transmitted from the engine start control device 401, the switch function assignment storage section 404 provided in the switch function assignment processing section 403 stores the functions assigned to the operation device group 302 immediately before the reception of the signal. In a case where the engine is started again (at a next time when the engine is started), a signal determining that the engine has been started is transmitted from the engine start control device 401 to the switch function assignment processing section 403, and a signal indicating the functions assigned immediately before the engine was started is transmitted to the monitor 303 through the signal output section 405 and the display processing section 406, and at the same time, the functions assigned immediately before the engine was started are assigned to the dial operation device 305 and the push button operation devices 306 to 309.

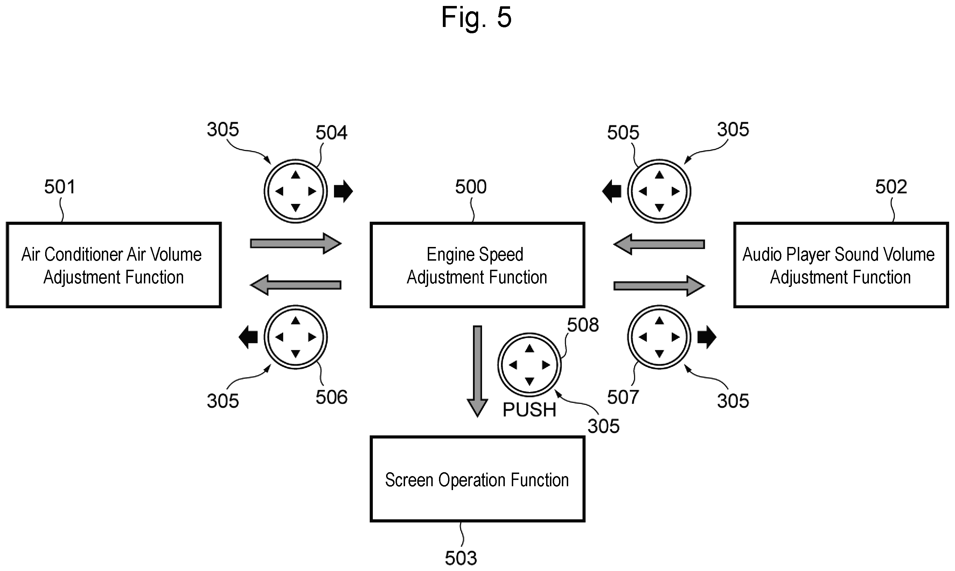

Fig. 5 is a diagram schematically illustrating an example of a function assignment switching method using the dial operation device 305. The rotation operation of the dial operation device 305 according to the present embodiment is exclusively assigned one function among an engine speed adjustment function of adjusting the speed of the engine that drives (the work device 1A of) the hydraulic excavator 1, an audio player sound volume adjustment function of adjusting a sound volume of an audio player that plays audio sound in the operator's room 1f of the vehicle body 1B, and an air conditioner air volume adjustment function of adjusting an air volume of an air conditioner that performs air conditioning in the operator's room 1f of the vehicle body 1B.

In a case where the function assigned to the rotation operation of the dial operation device 305 is the engine speed adjustment function 500, when the dial operation device 305 is tilted right (507), the function assigned to the rotation operation of the dial operation device 305 is switched to the audio player sound volume adjustment function 502. In this state, when the dial operation device 305 is tilted left (505), the function assigned to the rotation operation of the dial operation device 305 is switched to the state before being switched to the audio player sound volume adjustment function 502, that is, the engine speed adjustment function 500.

In a case where the function assigned to the rotation operation of the dial operation device 305 is the engine speed adjustment function 500, when the dial operation device 305 is tilted left (506), the function assigned to the rotation operation of the dial operation device 305 is switched to the air conditioner air volume adjustment function 501. In this state, when the dial operation device 305 is tilted right (504), the function assigned to the rotation operation of the dial operation device 305 is switched to the state before being switched to the air conditioner air volume adjustment function 501, that is, the engine speed adjustment function 500.

In a case where the function assigned to the rotation operation of the dial operation device 305 is the engine speed adjustment function 500, when the dial operation device 305 is pressed (508), the function assigned to the cross-direction operation of the dial operation device 305 is switched to a screen operation function 503 for moving a cursor displayed on the monitor 303.

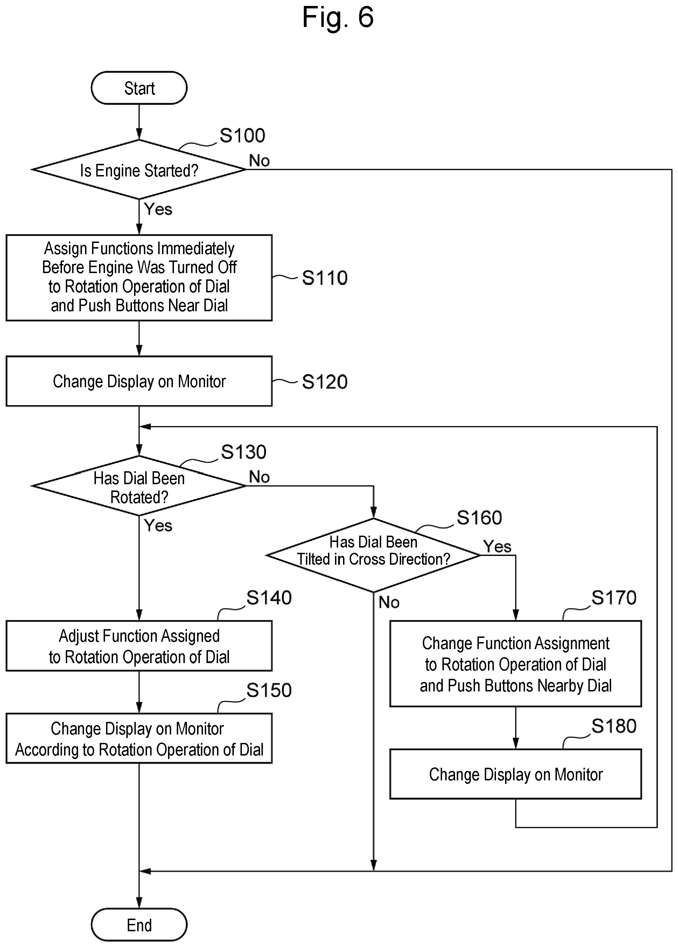

Fig. 6 is a flowchart illustrating processing performed by the operation device control device 400 (during the rotation operation and the cross-direction operation of the dial operation device 305). The operations based on the flowchart of Fig. 6 are as follows.

S100: When the engine is started, the processing proceeds to S110. When the engine is not started, the processing proceeds to the end.

S110: The function assigned to the rotation operation of the dial operation device 305 and the functions assigned to the pressing operations of the push button operation devices 306 to 309 of the operation device group 302 are assigned to the respective functions assigned immediately before the engine was turned off.

S120: The functions assigned in S110 and the current setting values of the assigned functions are schematically displayed on the monitor 303.

S130: When a rotation operation of the dial operation device 305 is performed, the processing proceeds to S140. When no rotation operation of the dial operation device 305 is performed, the processing proceeds to S160.

S140: The function assigned to the rotation operation of the dial operation device 305 is adjusted. One of the engine speed adjustment function, the audio player sound volume adjustment function, and the air conditioner air volume adjustment function is assigned to the rotation operation of the dial operation device 305, and the adjustment is performed according to the rotation operation amount and the rotation direction of the dial operation device 305.

S150: The display content on the monitor 303 displayed in S120 is changed according to the result of S140.

S160: When the dial operation device 305 is tilted in one of the cross directions, the processing proceeds to S170. Otherwise, the processing proceeds to the end.

S170: The function assigned to the rotation operation of the dial operation device 305 and the functions assigned to the pressing operations of the push button operation devices 306 to 309 of the operation device group 302 are switched to functions different from the already assigned functions (see Fig. 5).

S180: The functions assigned in S170 and the current setting values of the assigned functions are schematically displayed on the monitor 303, and the processing proceeds to S130.

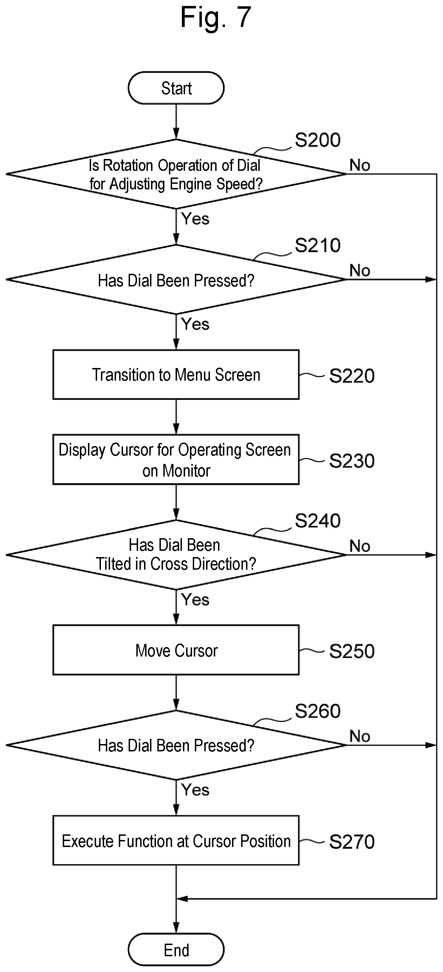

Fig. 7 is a flowchart illustrating processing performed by the operation device control device 400 (during the pressing operation of the dial operation device 305). The operations based on the flowchart of Fig. 7 are as follows.

S200: When the engine speed adjustment function is assigned to the rotation operation of the dial operation device 305, the processing proceeds to S210. When another function is assigned, the processing proceeds to the end.

S210: When the dial operation device 305 is pressed, the processing proceeds to S220. When the dial operation device 305 is not pressed, the processing proceeds to the end.

S220: The screen displayed on the monitor 303 transitions to a menu screen. The menu screen is, for example, a screen displaying a menu for changing settings of the vehicle body and checking information related to the vehicle body.

S230: The display is performed in such a manner that a cursor is positioned on an item to be operated in the menu screen displayed in S220. That is, a cursor for operating the screen is displayed on the monitor 303 where the menu screen is displayed.

S240: When the dial operation device 305 is tilted in one of the cross directions, the processing proceeds to S250. When the dial operation device 305 is not tilted, the processing proceeds to the end.

S250: The position of the cursor displayed in S230 moves according to the direction in which the dial operation device 305 was tilted in S240. As described above, when the cross-direction operation of the dial operation device 305 can be used to move the cursor in the monitor 303 by performing the pressing operation of the dial operation device 305, the rotation operation of the dial operation device 305 is disabled.

S260: When the dial operation device 305 is pressed, the processing proceeds to S270. When the dial operation device 305 is not pressed, the processing proceeds to the end.

S270: The function assigned to the cursor position moved in S250 is executed. As an example, the screen transitions to a screen for setting the function at the cursor position. Note that, as described above, the rotation operation of the dial operation device 305 is enabled by performing the pressing operation again after the pressing operation of the dial operation device 305.

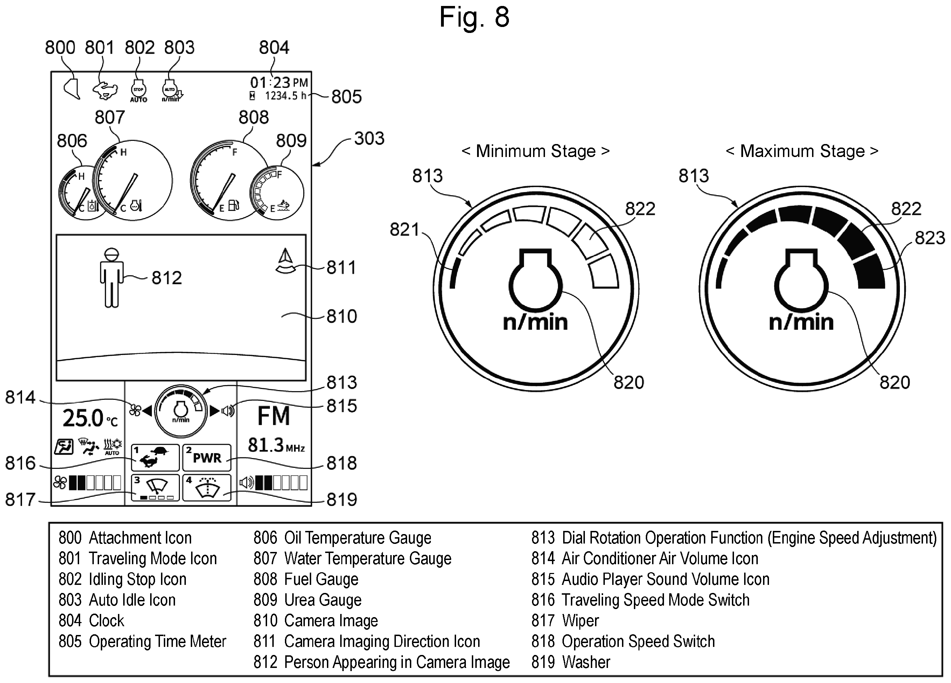

Fig. 8 is a diagram schematically illustrating an example in which displays related to the basic functions of the excavator and displays in a case where the function assigned to the rotation operation of the dial operation device 305 is the engine speed adjustment function are displayed on the monitor 303.

Next to a display (design) 813 imitating the dial operation device 305, there are arranged a display 815 indicating that the rotation operation of the dial operation device 305 is switched to the audio player sound volume adjustment function when the dial operation device 305 is tilted right, and a display 814 indicating that the rotation operation of the dial operation device 305 is switched to the air conditioner air volume adjustment function when the dial operation device 305 is tilted left. The display 814 can also switch the rotation operation of the dial operation device 305 to the air conditioner air volume adjustment function by touching the monitor 303. The display 815 can also switch the rotation operation of the dial operation device 305 to the audio player sound volume adjustment function by touching the monitor 303.

In a design 813 imitating the dial operation device 305, a design 820 indicating that the engine speed adjustment function has been assigned is displayed, and a display of a design 822 indicating an adjustment stage changes from a display 821 indicating the minimum stage to a display 823 indicating the maximum stage according to the adjustment of the engine speed.

Displays 816 to 819 of the functions assigned to the push button operation devices 306 to 309 imitate the shapes of the buttons of the actual push button operation devices 306 to 309, and the functions are executed by pressing the push button operation devices 306 to 309 or touching the displays 816 to 819 on the monitor 303.

Functions are assigned to the push button operation devices 306 to 309 according to the function assigned to the rotation operation of the dial operation device 305 (here, the engine speed adjustment function). The displays indicating the functions assigned to the push button operation devices 306 to 309 are as follows.

The display 816 indicating the function assigned to the push button operation device 306: Switching the traveling speed mode of the lower traveling body 1e

The display 818 indicating the function assigned to the push button operation device 307: Switching the operation speed of the upper swing body 1d

The display 817 indicating the function assigned to the push button operation device 308: Wiper function

The display 819 indicating the function assigned to the push button operation device 309: Front window washer function

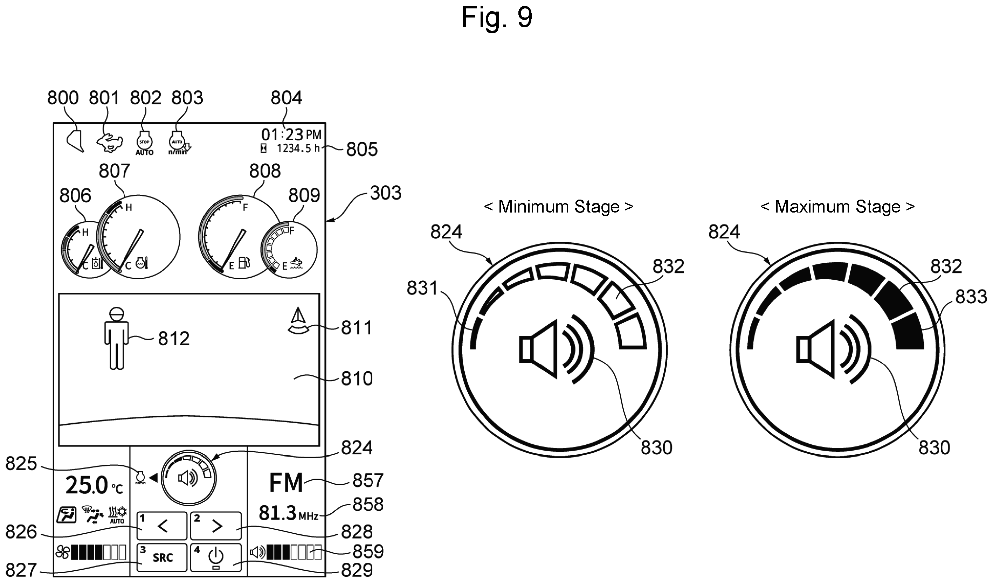

Fig. 9 is a diagram schematically illustrating an example in which displays related to the basic functions of the excavator and displays in a case where the function assigned to the rotation operation of the dial operation device 305 is the audio player sound volume adjustment function are displayed on the monitor 303.

Next to a display (design) 824 imitating the dial operation device 305, there is arranged a display 825 indicating that the rotation operation of the dial operation device 305 is switched to the engine speed adjustment function when the dial operation device 305 is tilted left. The display 825 can also switch the rotation operation of the dial operation device 305 to the engine speed adjustment function by touching the monitor 303.

In a design 824 imitating the dial operation device 305, a design 830 indicating that the audio player sound volume adjustment function has been assigned is displayed, and a display of a design 832 indicating an adjustment stage changes from a display 831 indicating the minimum stage to a display 833 indicating the maximum stage according to the adjustment of the audio player sound volume.

Displays 826 to 829 of the functions assigned to the push button operation devices 306 to 309 imitate the shapes of the buttons of the actual push button operation devices 306 to 309, and the functions are executed by pressing the push button operation devices 306 to 309 or touching the displays 826 to 829 on the monitor 303.

Functions are assigned to the push button operation devices 306 to 309 according to the function assigned to the rotation operation of the dial operation device 305 (here, the audio player sound volume adjustment function). The displays indicating the functions assigned to the push button operation devices 306 to 309 are as follows.

The display 826 indicating the function assigned to the push button operation device 306: Switching to the broadcast station preceding the currently selected radio station

The display 828 indicating the function assigned to the push button operation device 307: Switching to the broadcast station following the currently selected radio station

The display 827 indicating the function assigned to the push button operation device 308: Switching the audio source

The display 829 indicating the function assigned to the push button operation device 309: Turning on/off the audio power

There are arranged a display 857 indicating whether the currently selected radio is AM or FM, a display 858 indicating a frequency, and a display 859 indicating a current sound volume of the audio player. These displays are always displayed even when the function assigned to the rotation operation of the dial operation device 305 is other than the audio player sound volume adjustment function.

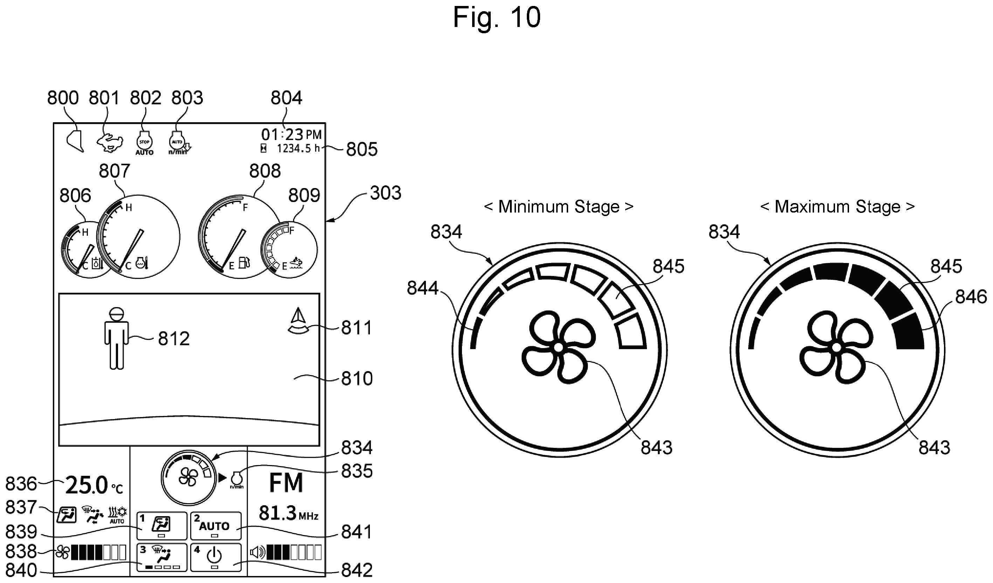

Fig. 10 is a diagram schematically illustrating an example in which displays related to the basic functions of the excavator and displays in a case where the function assigned to the rotation operation of the dial operation device 305 is the air conditioner air volume adjustment function are displayed on the monitor 303.

Next to a display (design) 834 imitating the dial operation device 305, there is arranged a display 835 indicating that the rotation operation of the dial operation device 305 is switched to the engine speed adjustment function when the dial operation device 305 is tilted right. The display 835 can also switch the rotation operation of the dial operation device 305 to the engine speed adjustment function by touching the monitor 303.

In a design 834 imitating the dial operation device 305, a design 843 indicating that the air conditioner air volume adjustment function has been assigned is displayed, and a display of a design 845 indicating an adjustment stage changes from a display 844 indicating the minimum stage to a display 846 indicating the maximum stage according to the adjustment of the air conditioner air volume.

Displays 839 to 842 of the functions assigned to the push button operation devices 306 to 309 imitate the shapes of the buttons of the actual push button operation devices 306 to 309, and the functions are executed by pressing the push button operation devices 306 to 309 or touching the displays 839 to 842 on the monitor 303.

Functions are assigned to the push button operation devices 306 to 309 according to the function assigned to the rotation operation of the dial operation device 305 (here, the air conditioner air volume adjustment function). The displays indicating the functions assigned to the push button operation devices 306 to 309 are as follows.
The display 839 indicating the function assigned to the push button operation device 306: Turning on/off the internal air circulation
The display 841 indicating the function assigned to the push button operation device 307: Turning on/off the automatic air conditioner
The display 840 indicating the function assigned to the push button operation device 308: Switching the air outlet
The display 842 indicating the function assigned to the push button operation device 309: Turning on/off the air conditioner power

There are arranged a display 836 indicating a currently set temperature of the air conditioner, a display 837 indicating a state of inside air circulation, a state of the air outlet, and a state of the automatic air conditioner, and a display 838 indicating a current air volume setting state of the air conditioner. These displays are always displayed even when the function assigned to the rotation operation of the dial operation device 305 is other than the air conditioner air volume adjustment function.

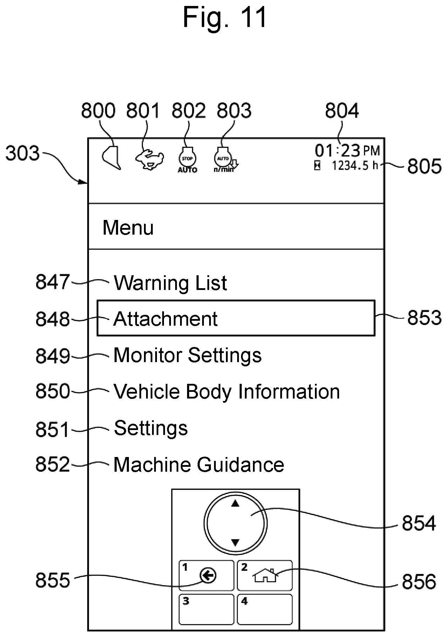

Fig. 11 is a diagram schematically illustrating a menu screen on which the functions of the excavator can be set and information can be browsed as an example in which displays related to the basic functions of the excavator and displays in a case where the function assigned to the cross-direction operation of the dial operation device 305 is the screen operation function are displayed on the monitor 303. In a state where a cursor 853 is positioned on the attachment 848 among menu items 847 to 852, when the dial operation device 305 is tilted up, the cursor 853 moves to a warning list 847, and when the dial operation device 305 is tilted down, the cursor 853 moves to a monitor setting 849. The menu items 847 to 852 displayed on the monitor 303 also execute the functions by touching the monitor 303.

In a design 854 imitating the dial operation device 305, there is a display indicating a state in which the dial operation device 305 can be tilted up and down as a screen operation function.

Functions are assigned to the push button operation devices 306 to 309 according to the screen operation function assigned to the pressing operation of the dial operation device 305. The displays indicating the functions assigned to the push button operation devices 306 and 307 are as follows. The functions are executed by pressing the push button operation devices 306 and 307 or touching displays 855 and 856 on the monitor 303.
The display 855 indicating the function assigned to the push button operation device 306: Returning to the previous level
The display 856 indicating the function assigned to the push button operation device 307: Switching to the home screen (the state in which the function assigned to the rotation operation of the dial operation device 305 is the engine speed adjustment function)

### [Effects According to Present Embodiment]

In a case where an operation device capable of selectively assigning, to a rotation operation of a dial, a function of adjusting a rotation speed of an engine and a screen operation function of performing an operation according to a screen displayed on a monitor is used as in the conventional art, in order to adjust an audio player sound volume after adjusting the engine speed, it is necessary to switch the function assigned to the rotation operation of the dial to a screen operation function by performing a certain operation, and thereafter move a cursor to an audio player sound volume adjustment function, and then adjust the audio player sound volume, making it difficult to adjust the audio player sound volume instantly. On the other hand, in a case where a dial operation device dedicated to the audio player sound volume adjustment function is prepared separately from the operation device according to the conventional art, it is necessary to release the hand from the dial once after adjusting the engine speed, and switch to and operate the operation device for adjusting the audio player sound volume, making it difficult to adjust the audio player sound volume instantly.

### [Effect 1]

In contrast, in the present embodiment, the function assigned to the rotation operation of the dial is switched from the engine speed adjustment function to the audio player sound volume adjustment function simply by tilting the dial operation device 305 in the right direction once without releasing the hand from the dial operation device 305, making it possible to instantly adjust the audio player sound volume in response to the change in how the audio player sound volume sounds according to the result of adjusting the engine speed. Further, after the adjustment of the audio player sound volume, the assignment of the rotation operation of the dial can be switched to the engine speed adjustment function simply by tilting the dial operation device 305 in the left direction once, making it possible to continue the work efficiently. Other effects according to the present embodiment include the following effects 2 to 6.

### [Effect 2]

As a general and efficient function that is adjusted by performing a rotation operation of the dial in addition to the engine speed and the audio player sound volume, there is an air conditioner air volume adjustment function. In this case as well, the function assigned to the rotation operation of the dial operation device 305 can be switched from the engine speed adjustment function to the air conditioner air volume adjustment function simply by tilting the dial operation device 305 in the left direction once, making it possible to efficiently adjust the air conditioner air volume.

### [Effect 3]

Since the engine speed adjustment function, which affects the efficiency of the work itself, is positioned between the audio player sound volume adjustment function and the air conditioner air volume adjustment function as a function assigned to the rotation operation of the dial operation device 305 (see Fig. 5), when the function assigned to the rotation operation of the dial operation device 305 during the work is thought to be the engine speed adjustment function, the operator can efficiently adjust the audio player sound volume and the air conditioner air volume, and at the same time, can easily memorize the method of switching the function assigned to the rotation operation of the dial operation device 305.

### [Effect 4]

Since the function assigned to the rotation operation of the dial operation device 305 and the setting state of the function are displayed on monitor 303 (813, 824, 834), it is possible to adjust the function assigned to the rotation operation of the dial operation device 305 while viewing the monitor 303, and instantly view a camera image 810 when it is necessary to check the safety of the surroundings.

### [Effect 5]

Since the operation device group 302 includes the push button devices 306 to 309, to which functions are assigned according to the function assigned to the rotation operation of the dial operation device 305, near the dial operation device 305, it is possible to efficiently operate the functions related to the function assigned to the rotation operation of the dial operation device 305.

### [Effect 6]

Since there is a display imitating the operation device group 302 on the monitor 303, even if the functions are not printed on the dial operation device 305 and the push button operation devices 306 to 309 of the operation device group 302, it is easy to understand the correspondence relationship between the functions assigned to the dial operation device 305 and the push button operation devices 306 to 309.

In the above-described embodiment, the switch of the function assignment to the rotation operation of the dial operation device 305 is executed by a cross-direction operation of the dial operation device 305, but only needs to be executed by an operation in a direction different from that of the rotation operation of the dial operation device 305, and may be executed, for example, by receiving an operation in an I-shaped direction, a T-shaped direction, or an L-shaped direction according to the number of functions. In the above-described embodiment, the cross-direction operation of the dial operation device 305 is executed by tilting (inclining) the dial operation device up, down, left, or right, but may be executed by sliding the dial operation device 305 up, down, left, or right.

### [Summary of Present Embodiment]

As described above, an operation device 302 according to the present embodiment includes: a dial (a dial operation device 305) (installed in an operator's room of a work machine including an upper swing body and a lower traveling body) configured to receive a rotation operation and an operation in a direction different from that of the rotation operation (a cross direction); and a controller (an operation device control device 400) configured to switch a function assigned to the rotation operation of the dial to a first adjustment function and a second adjustment function when the operation in the direction different from that of the rotation operation of the dial (the cross direction) is received, the first adjustment function being an engine speed adjustment function of adjusting a speed of an engine, and the second adjustment function being at least one of an audio player sound volume adjustment function of adjusting a sound volume of an audio player and an air conditioner air volume adjustment function of adjusting an air volume of an air conditioner (that is, the engine speed adjustment function and the audio player sound volume adjustment function, the engine speed adjustment function and the air conditioner air volume adjustment function, or the engine speed adjustment function, the audio player sound volume adjustment function, and the air conditioner air volume adjustment function) to exclusively assign, to the rotation operation of the dial, one of the first adjustment function, which is the engine speed adjustment function, and the second adjustment function, which is at least one of the audio player sound volume adjustment function or the air conditioner air volume adjustment function.

The operation in the direction different from that of the rotation operation of the dial is an operation in an inclining or sliding direction (a cross direction) of the dial. That is, when receiving the operation of the dial in the inclining or sliding direction (the cross direction), the controller (the operation device control device 400) switches the function assigned to the rotation operation of the dial to the first adjustment function, which is the engine speed adjustment function, and the second adjustment function, which is at least one of the audio player sound volume adjustment function or the air conditioner air volume adjustment function.

The controller (the operation device control device 400) is configured to switch the function assigned to the rotation operation of the dial to the engine speed adjustment function, the audio player sound volume adjustment function, and the air conditioner air volume adjustment function, in response to the reception of the operation in the direction different from that of the rotation operation of the dial (the cross direction), to exclusively assign, to the rotation operation of the dial, one of the engine speed adjustment function, the audio player sound volume adjustment function, and the air conditioner air volume adjustment function, and an order in which the function assigned to the rotation operation of the dial is switched in response to the reception of the operation in the direction different from that of the rotation operation of the dial is an order in which the engine speed adjustment function is located between the audio player sound volume adjustment function and the air conditioner air volume adjustment function.

The controller (the operation device control device 400) is configured to switch the function assigned to the rotation operation of the dial to the audio player sound volume adjustment function when receiving an operation in one direction (tilted right) different from that of the rotation operation of the dial in a state where the engine speed adjustment function is assigned to the rotation operation of the dial, and switch the function assigned to the rotation operation of the dial to the air conditioner air volume adjustment function when receiving an operation in a direction (tilted left) opposite to the one direction of the dial in a state where the engine speed adjustment function is assigned to the rotation operation of the dial.

The controller (the operation device control device 400) is configured to switch the function assigned to the rotation operation of the dial to the audio player sound volume adjustment function when receiving an operation in one direction (tilted right) different from that of the rotation operation of the dial in a state where the engine speed adjustment function is assigned to the rotation operation of the dial, switch the function assigned to the rotation operation of the dial to the engine speed adjustment function (before switching to the audio player sound volume adjustment function) when receiving an operation in a direction (tilted left) opposite to the one direction of the dial in a state where the audio player sound volume adjustment function is assigned to the rotation operation of the dial, switch the function assigned to the rotation operation of the dial to the air conditioner air volume adjustment function when receiving an operation in the opposite direction (tilted left) of the dial in a state where the engine speed adjustment function is assigned to the rotation operation of the dial, and switch the function assigned to the rotation operation of the dial to the engine speed adjustment function (before switching to the air conditioner air volume adjustment function) when receiving an operation in the one direction (tilted right) of the dial in a state where the air conditioner air volume adjustment function is assigned to the rotation operation of the dial.

The controller (the operation device control device 400) is configured to assign a function assigned to the rotation operation of the dial immediately before turning off the engine to the rotation operation of the dial at a next time when the engine is started.

A push button (push button operation devices 306 to 309) to which a function is assigned according to the function assigned to the rotation operation of the dial is disposed near the dial.

A work machine (a hydraulic excavator 1) according to the present embodiment includes a work machine body 1B, a work device 1A attached to the work machine body 1B and configured to execute work, an engine configured to drive the work device 1A, an operator's room 1f on which an operator boards, at least one of an audio player configured to play audio sound in the operator's room 1f or an air conditioner configured to perform air conditioning in the operator's room 1f, a dial (a dial operation device 305) configured to receive a rotation operation and an operation in a direction different from that of the rotation operation (a cross direction), a controller (an operation device control device 400) configured to switch a function assigned to the rotation operation of the dial to a first adjustment function and a second adjustment function when the operation in the direction different from that of the rotation operation of the dial (the cross direction) is received, the first adjustment function being an engine speed adjustment function of adjusting a speed of the engine, and the second adjustment function being at least one of an audio player sound volume adjustment function of adjusting a sound volume of the audio player or an air conditioner air volume adjustment function of adjusting an air volume of the air conditioner (that is, the engine speed adjustment function and the audio player sound volume adjustment function, the engine speed adjustment function and the air conditioner air volume adjustment function, or the engine speed adjustment function, the audio player sound volume adjustment function, and the air conditioner air volume adjustment function) to exclusively assign, to the rotation operation of the dial, one of the first adjustment function, which is the engine speed adjustment function, and the second adjustment function, which is at least one of the audio player sound volume adjustment function or the air conditioner air volume adjustment function, and a (touch-operable) monitor 303 disposed in the operator's room 1f and configured to display a state of the function assigned to the rotation operation of the dial.

A push button (push button operation devices 306 to 309) to which a function is assigned according to the function assigned to the rotation operation of the dial is disposed, and a state of the function assigned to the push button is displayed on the monitor 303 together with a state of the function assigned to the rotation operation of the dial.

The operation in the direction different from that of the rotation operation of the dial is a cross-direction operation of the dial, the cross-direction operation of the dial is usable for a screen operation (moving a cursor) within the monitor 303 in addition to an operation of switching the function assigned to the rotation operation of the dial, and when the cross-direction operation of the dial is usable for a screen operation (moving a cursor) within the monitor 303, the rotation operation of the dial is disabled.

The operation in the direction different from that of the rotation operation of the dial is a pressing operation of the dial, and the cross-direction operation of the dial is usable for a screen operation (moving a cursor) within the monitor 303 and the rotation operation of the dial is disabled by performing the pressing operation of the dial.

The rotation operation of the dial is enabled by performing a pressing operation again after the pressing operation of the dial.

That is, in the operation device 302 according to the present embodiment, for example, in a dial having a rotation mechanism and a mechanism that can be tilted in a cross direction, an engine speed adjustment function, an audio player sound volume adjustment function, and an air conditioner air volume adjustment function can be exclusively assigned to the rotation operation of the dial. When the dial is tilted in one direction among the cross directions in a state where the engine speed adjustment function (first adjustment function) is assigned to the rotation operation of the dial, the assignment of the rotation operation of the dial is switched to the audio player sound volume adjustment function or the air conditioner air volume adjustment function (second adjustment function). In a state where the audio player sound volume adjustment function or the air conditioner air volume adjustment function (second adjustment function) is assigned to the rotation operation of the dial, the assignment of the rotation operation of the dial is switched (returned) to the engine speed adjustment function (first adjustment function) by tilting the dial in a direction opposite to that when the assignment of the rotation operation of the dial is switched from the engine speed adjustment function (first adjustment function) to the audio player sound volume adjustment function or the air conditioner air volume adjustment function (second adjustment function).

According to the present embodiment, the audio player sound volume can be instantly adjusted even when how the loudness of the sound of the audio player changes as a result of adjusting the engine speed during audio playback. Alternatively, the air volume of the air conditioner can be instantly adjusted even when a request for adjusting the air volume of the air conditioner is generated as a result of adjusting the engine speed during the operation of the air conditioner.

Note that the present invention is not limited to the above-described embodiment, and includes various modifications. For example, the above-described embodiment has been described in detail in order to describe the present invention in an easy-to-understand manner, and the present invention is not necessarily limited to one having all the configurations described above. Further, a part of a configuration of one embodiment can be replaced with a configuration of another embodiment, and a configuration of an embodiment can be added to a configuration of another embodiment. In addition, it is possible to perform addition, deletion, and replacement of other configurations for a part of a configuration of each embodiment.

In addition, the components related to the control device 400 described above, functions and execution processing of the components, and the like may be partially or entirely realized by hardware (for example, by designing the logic for executing each function as an integrated circuit). Furthermore, the components related to the control device 400 described above may be programs (software) that are read and executed by an arithmetic processing device (e.g., a CPU) to implement the functions related to the components of the control device 400. The information related to the programs can be stored in, for example, a semiconductor memory (such as a flash memory or an SSD), a magnetic storage device (such as a hard disk drive), a recording medium (such as a magnetic disk or an optical disk), or the like.

In the above description of the embodiment, control lines and information lines illustrated are those understood to be necessary for the description of the embodiment, but this does not necessarily mean that all control lines and information lines related to the product are illustrated. In practice, it may be considered that almost all the components are connected to each other.

### Reference Signs List

- 1: Hydraulic excavator (work machine)
- 1A: Work device
- 1B: Vehicle body (work machine body)
- 1a: Boom
- 1b: Arm
- 1c: Bucket
- 1d: Upper swing body
- 1e: Lower traveling body
- If: Operator's room
- 2: Hydraulic pump
- 3a to 3f: Hydraulic actuator
- 4a to 4f: Operation lever device
- 5a to 5f: Flow rate control valve
- 6: Relief valve
- 7: Control unit
- 301: Lever (safety device for enabling/disabling operations of 4a to 4f)
- 302: Operation device group (operation devices)
- 303: Monitor
- 304: Engine starter
- 305: Dial operation device (dial)
- 306 to 309: Push button operation device (push button)
- 400: Operation device control device (controller)
- 401: Engine start control device
- 402: Input determination section
- 403: Switch function assignment processing section
- 404: Switch function assignment storage section
- 405: Signal output section
- 406: Display processing section

## Claims

1. An operation device comprising:
a dial configured to receive a rotation operation and an operation in a direction different from that of the rotation operation; and
a controller configured to switch a function assigned to the rotation operation of the dial to a first adjustment function and a second adjustment function when the operation in the direction different from that of the rotation operation of the dial is received, the first adjustment function being an engine speed adjustment function of adjusting a speed of an engine, and the second adjustment function being at least one of an audio player sound volume adjustment function of adjusting a sound volume of an audio player and an air conditioner air volume adjustment function of adjusting an air volume of an air conditioner.

2. The operation device according to claim 1, wherein
the operation in the direction different from that of the rotation operation of the dial is an operation in an inclining or sliding direction of the dial.

3. The operation device according to claim 1, wherein
the controller is configured to switch the function assigned to the rotation operation of the dial to the engine speed adjustment function, the audio player sound volume adjustment function, and the air conditioner air volume adjustment function in response to the reception of the operation in the direction different from that of the rotation operation of the dial, and
an order in which the function assigned to the rotation operation of the dial is switched in response to the reception of the operation in the direction different from that of the rotation operation of the dial is an order in which the engine speed adjustment function is located between the audio player sound volume adjustment function and the air conditioner air volume adjustment function.

4. The operation device according to claim 3, wherein
the controller is configured to:
switch the function assigned to the rotation operation of the dial to the audio player sound volume adjustment function when receiving an operation in one direction different from that of the rotation operation of the dial in a state where the engine speed adjustment function is assigned to the rotation operation of the dial; and
switch the function assigned to the rotation operation of the dial to the air conditioner air volume adjustment function when receiving an operation in a direction opposite to the one direction of the dial in a state where the engine speed adjustment function is assigned to the rotation operation of the dial.

5. The operation device according to claim 3, wherein
the controller is configured to:
switch the function assigned to the rotation operation of the dial to the audio player sound volume adjustment function when receiving an operation in one direction different from that of the rotation operation of the dial in a state where the engine speed adjustment function is assigned to the rotation operation of the dial;
switch the function assigned to the rotation operation of the dial to the engine speed adjustment function when receiving an operation in a direction opposite to the one direction of the dial in a state where the audio player sound volume adjustment function is assigned to the rotation operation of the dial;
switch the function assigned to the rotation operation of the dial to the air conditioner air volume adjustment function when receiving an operation in the opposite direction of the dial in a state where the engine speed adjustment function is assigned to the rotation operation of the dial; and
switch the function assigned to the rotation operation of the dial to the engine speed adjustment function when receiving an operation in the one direction of the dial in a state where the air conditioner air volume adjustment function is assigned to the rotation operation of the dial.

6. The operation device according to claim 1, wherein
the controller is configured to assign a function assigned to the rotation operation of the dial immediately before turning off the engine to the rotation operation of the dial at a next time when the engine is started.

7. The operation device according to claim 1, wherein
a push button to which a function is assigned according to the function assigned to the rotation operation of the dial is disposed near the dial.

8. A work machine comprising:
a work machine body;
a work device attached to the work machine body and configured to execute work;
an engine configured to drive the work device;
an operator's room on which an operator boards;
at least one of an audio player configured to play audio sound in the operator's room and an air conditioner configured to perform air conditioning in the operator's room;
a dial configured to receive a rotation operation and an operation in a direction different from that of the rotation operation;
a controller configured to switch a function assigned to the rotation operation of the dial to a first adjustment function and a second adjustment function when the operation in the direction different from that of the rotation operation of the dial is received, the first adjustment function being an engine speed adjustment function of adjusting a speed of the engine, and the second adjustment function being at least one of an audio player sound volume adjustment function of adjusting a sound volume of the audio player or an air conditioner air volume adjustment function of adjusting an air volume of the air conditioner; and
a monitor disposed in the operator's room and configured to display a state of the function assigned to the rotation operation of the dial.

9. The work machine according to claim 8, wherein
the operation in the direction different from that of the rotation operation of the dial is a cross-direction operation of the dial, the cross-direction operation of the dial is usable for a screen operation within the monitor in addition to an operation of switching the function assigned to the rotation operation of the dial, and when the cross-direction operation of the dial is usable for a screen operation within the monitor, the rotation operation of the dial is disabled.

10. The work machine according to claim 9, wherein
the operation in the direction different from that of the rotation operation of the dial is a pressing operation of the dial, and the cross-direction operation of the dial is usable for a screen operation within the monitor and the rotation operation of the dial is disabled by performing the pressing operation of the dial.

11. The work machine according to claim 10, wherein
the rotation operation of the dial is enabled by performing a pressing operation again after the pressing operation of the dial.
